# EUROPÄISCHE PATENTSCHRIFT

(11) **EP 0 504 565 B1**
(45) Veröffentlichungstag und Bekanntmachung des Hinweises auf die Patenterteilung: **09.11.1994**
(21) Anmeldenummer: 92101776.0
(22) Anmeldetag: 04.02.1992
(51) Int. Cl.: F16H 57/04, F16H 1/46

(54) **Mehrstufiges Planetengetriebe**
Multi-stage planetary reduction gear
Train épicycloidal à plusieurs étages

(30) Priorität: 26.02.1991 DE 4105907
(43) Veröffentlichungstag der Anmeldung: 23.09.1992
(73) Patentinhaber: DORSTENER MASCHINENFABRIK AKTIENGESELLSCHAFT, D-46284 Dorsten (DE)
(72) Erfinder: Briehl, Gerhard, Dipl.-Ing., W-4290 Bocholt (DE)
(74) Vertreter: Honke, Manfred, Dr.-Ing.

(56) Entgegenhaltungen:
- DE-A- 2 649 949
- DE-A- 2 809 734
- DE-A- 2 913 039
- DE-A- 3 331 038

## Beschreibung

Die Erfindung betrifft ein mehrstufiges Planetengetriebe, bestehend aus zwei oder mehr Einbausätzen mit jeweils äußerem Hohlrad, Planetenrädern und Sonnenrad, wobei die Einbausätze mittels die Hohlräder miteinander verbindender Zwischenringe zu einem abgestuften Getriebeblock zusammenbaubar sind.

Es sind mehrstufige Getriebe bekannt, die zu ihrer Kühlung einen Kühlmantel aufweisen, der das Getriebegehäuse gleichsam als Kühlschal umgibt. Außerdem kennt man Getriebe mit einer eingebauten Kühlschlange oder einem separaten Ölkühler. Endlich ist eine Kühlvorrichtung für ein Verzweigungsgetriebe mit einer oder mehreren Getriebestufen in einem Getriebegehäuse mit ungeteilter Gehäusewand bekannt. In diesem Fall ist ein Kühlmantel vorgesehen, wobei die ungeteilte Gehäusewand unter Bildung das Kühlmantels von einer ungeteilten Mantelwand umgeben ist, die gegen die Gehäusewand mittels Dichtringen abgedichtet ist.

Aus der DE-A-29 13 039 ist ein mehrstufiges Planetengetriebe der eingangs beschriebenen Ausführungsform bekannt, bei dem die Gehäuseteile unter Zwischenschaltung der Hohlräder durch Schrauben miteinander verbunden sind. Insgesamt wird hier ein mehrstufiges Planetengetriebe ohne Kühlung beschrieben.

Die DE-A-33 31 038 behandelt ein mehrstufiges Planetengetriebe, das aus einer oder mehreren Getriebestufen zusammengesetzt ist. Zwar sind die Hohlräder untereinander verbunden, jedoch nicht durch sie verbindende Zwischenringe. Ebenso ist zwar ein Kühlmantel vorgesehen, welcher jedoch als ungeteilter Kühlmantel ausgebildet und Teil des Getriebegehäuses ist.

Bei den bekannten Getrieben läßt sich schon aufgrund der verwicklichten Getriebegehäuse ein Baukastensystem mit separat gekühlten Getriebestufen nicht verwirklichen. - Hier setzt die Erfindung ein.

Der Erfindung liegt die Aufgabe zugrunde, ein mehrstufiges Planetengetriebe der eingangs beschriebenen Ausführungsform zu schaffen, dessen Einbausätze sich unter Verwirklichung eines Baukastensystems singulär temperieren, d. h. kühlen und erforderlichenfalls auch erwärmen lassen, und zwar unter Berücksichtigung einer in fertigungs- und montagetechnisch besonders einfachen Ausführungsform bei erhöhter Funktionssicherheit.

Diese Aufgabe löst die Erfindung bei einem gattungsgemäßen mehrstufigen Planetengetriebe dadurch, daß jedes Hohlrad wahlweise mit einem eigenen umlaufenden Außenmantel zur Bildung eines Ringkanals für die Führung eines Temperierungsmediums belegbar ist, daß die Außendurchmasser der Hohlräder bzw. der die einzelnen Getriebestufen bildenden Einbausätze derart abgestuft sind, daß einteilige Außenmäntel bei zusammengebauten Einbausätzen in axialer Richtung montierbar bzw. demontierbar sind, daß die Hohlräder bezüglich einer Senkrechten zur Drehachse als im Querschnitt symmetrische Hohlräder ausgebildet sind und beidseitig im Randbereich umlaufende, mit Dichtungsringen z. B. Schnurdichtungen, belegte Ringnuten aufweisen, und daß die Außenmäntel im Randbereich der Hohlräder auf die Dichtungsringe aufgesetzt sind. - Diese Maßnahmen der Erfindung haben zur Folge, daß die Einbausätze mittels der Zwischenringe zu einem mehrstufigen Getriebeblock zusammengebaut werden können, wobei jedes Hohlrad eines zu kühlenden oder zu erwärmenden Planetenrädertriebes einen eigenen Außenmantel für die Führung eines Temperierungsmediums erhält. Dadurch, daß die die einzelnen Getriebestufen bildenden Einbausätze derart abgestuft sind, daß einteilige Außenmäntel bei zusammengebauten Einbausätzen in axialer Richtung montierbar bzw. demontierbar sind, besteht die Möglichkeit, die einzelnen Einbausätze singulär zu temperieren, beispielsweise bei niedriger Anfahr- bzw. Betriebstemperatur zu erwärmen und im Betrieb zur Wärmeabfuhr zu kühlen. Darüber hinaus ist die Montage und Demontage der Außenmäntel zur Bildung der Ringkanäle für die Führung eines Temperierungsmediums bei jedem Hohlrad und folglich jedem Einbausatz auch bei zusammengebauten Einbausätzen jeweils nach Erfordernis möglich. Durch die Ausbildung der Hohlräder als im Querschnitt symmetrische Hohlräder mit beidseitig im Randbereich umlaufenden mit Dichtungsringen belegten Ringnuten wird erreicht, daß das Temperierungsmedium bei Leckagen nicht in die Einbausätze bzw. Planetenrädertriebe eindringen kann, allenfalls nach außen austreten kann. Außerdem wird durch die symmetrische Ausbildung der Hohlräder die Fertigung jedes Einbausatzes erheblich vereinfacht.

Weiter sieht die Erfindung vor, daß die Außenmäntel und Zwischenringe aneinander anschließen und gleichsam von selbst ein Getriebegehäuse für die Einbausätze bilden. Auf diese Weise wird die Fertigung jedes Einbausatzes noch einmal vereinfacht. Nach einer abgewandelten Ausführungsform der Erfindung können die Zwischenringe und die Hohlräder sogar als einteilige Bauteile ausgebildet sein.

Im folgenden wird die Erfindung anhand einer lediglich ein Ausführungsbeispiel darstellenden Zeichnung näher erläutert. Es zeigen:
- Fig. 1: eine angedeutete Antriebseinheit mit einem aus Einbausätzen bestehenden mehrstufigen Planetengetriebe mit teilweisem Axialschnitt,
- Fig. 2: den Gegenstand nach Fig. 1 ohne die Einbausätze,
- Fig. 3: lediglich die Hohlräder und Zwischenringe für den Gegenstand nach Fig. 1, und
- Fig. 4: eine abgewandelte Ausführungsform des Gegenstandes nach Fig. 3.

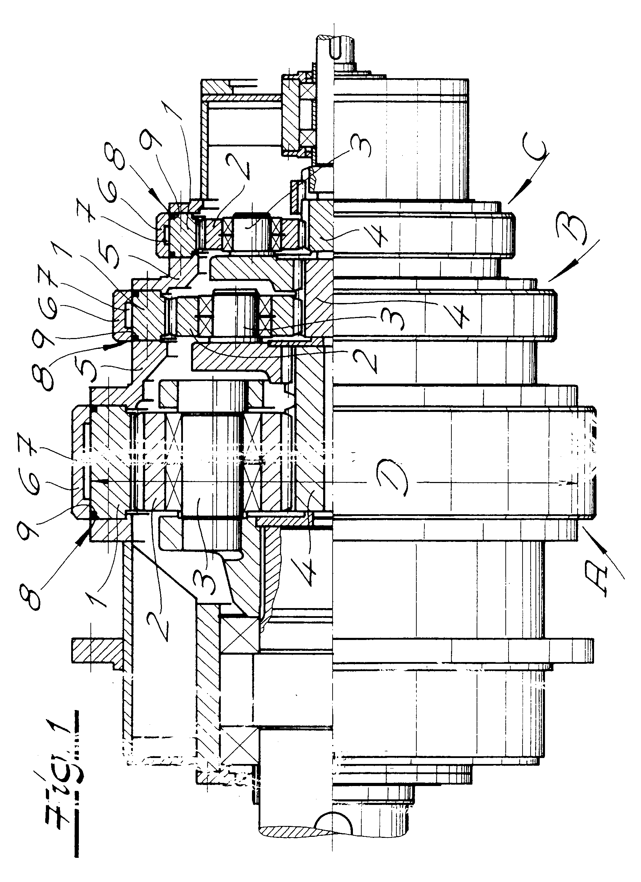

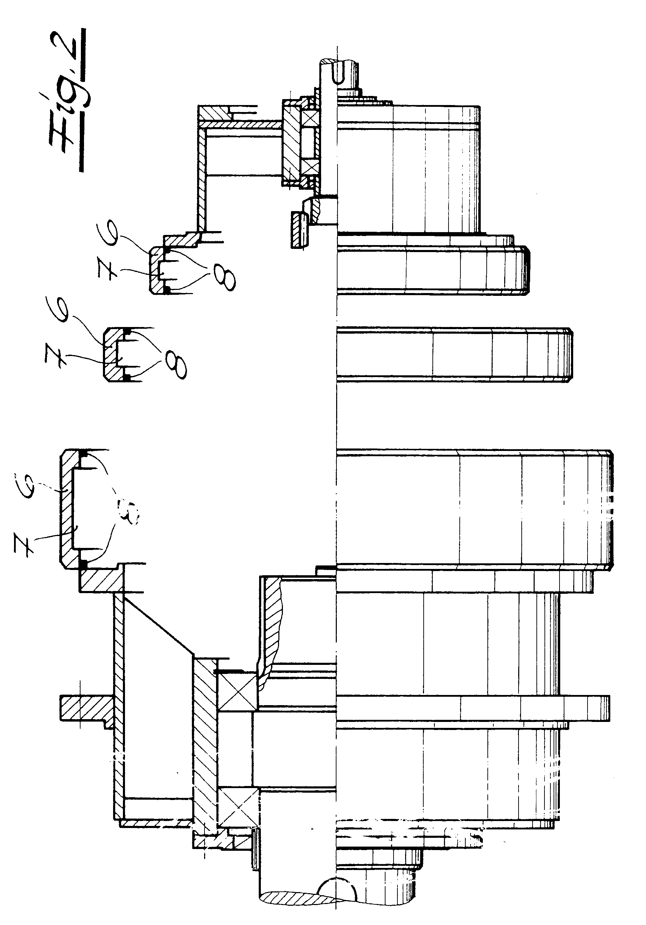

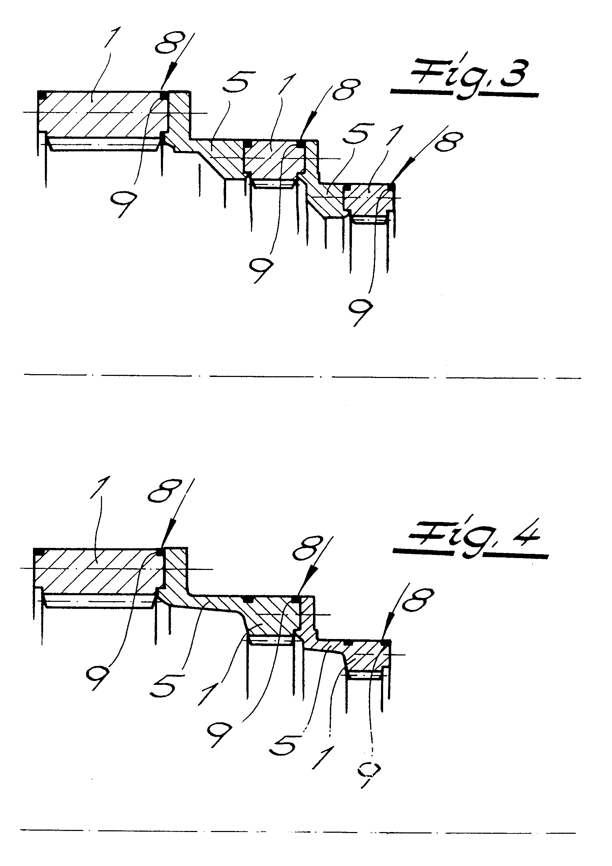

In den Figuren ist ein mehrstufiges Planetengetriebe dargestellt, welches in seinem grundsätzlichen Aufbau aus zwei oder mehr Einbausätzen A, B, C mit jeweils einem äußeren Hohlrad 1 mit Innenverzahnung, Planetenrädern 2 mit Planetenträgern 3 und einem Sonnenrad 4 besteht. Die Einbausätze A, B, C sind mittels die Hohlräder 1 miteinander verbindender Zwischenringe 5 zu einem abgestuften Getriebeblock zusammenbaubar. Jedes Hohlrad 1 ist wahlweise mit einem eigenen umlaufenden Außenmantel 6 zur Bildung eines Ringkanals 7 für die Führung eines Temperierungsmediums - also zum Kühlen oder Erwärmen des betreffenden Planetenrädertriebes - belegbar. Die Außendurchmesser D der Hohlräder 1 bzw. der die einzelnen Getriebestufen bildenden Einbausätze A, B, C sind derart abgestuft, daß einteilige Außenmäntel 6 bei zusammengebauten Einhausätzen in axialer Richtung montierbar bzw. demontierbar sind. Die Hohlräder 1 sind als im Querschnitt symmetrische Hohlräder ausgebildet und weisen beidseitig im Randbereich umlaufende mit Dichtungsringen 8, z. B. Schnurdichtungen, belegte Ringnuten 9 auf. Die Außenmäntel 6 sind im Randbereich der Hohlräder 1 auf die Dichtungsringe 8 aufgesetzt.

Die Außenmäntel 6 und Zwischenringe 5 schließen aneinander an und bilden ein Getriebegehäuse für die Einbausätze A, B, C. Die Zwischenringe 5 und die Hohlräder 1 können auch als einteilige Bauteile ausgebildet sein.

## Patentansprüche

1. Mehrstufiges Planetengetriebe, bestehend aus zwei oder mehr Einbausätzen (A,B,C) mit jeweils äußerem Hohlrad (1), Planetenrädern (2) und Sonnenrad (4), wobei die Einbausätze (A, B, C) mittels die Hohlräder (1) miteinander verbindender Zwischenringe (5) zu einem abgestuften Getriebeblock zusammenbaubar sind, **dadurch gekennzeichnet**, daß jedes Hohlrad (1) wahlweise mit einem eigenen umlaufenden Außenmantel (6) zur Bildung eines Ringkanals (7) für die Führung eines Temperierungsmediums belegbar ist, daß die Außendurchmesser (D) der Hohlräder (1) bzw. der die einzelnen Getriebestufen bildenden Einbausätze (A, B, C) derart abgestuft sind, daß einteilige Außenmäntel (6) bei zusammengebauten Einbausätzen in axialer Richtung montierbar bzw. demontierbar sind, daß die Hohlräder (1) bezüglich einer Senkrechten zur Drehachse als im Querschnitt symmetrische Hohlräder ausgebildet sind und beidseitig im Randbereich umlaufende mit Dichtungsringen (8) belegte Ringnuten (9) aufweisen, und daß die Außenmäntel (6) im Randbereich der Hohlräder (1) auf die Dichtungsringe (8) aufgesetzt sind.

2. Planetengetriebe nach Anspruch 1, dadurch gekennzeichnet, daß die Außenmäntel (6) und Zwischenringe (5) aneinander anschließen und ein Getriebegehäuse für die Einbausätze (A, B, C) bilden.

3. Planetengetriebe nach Anspruch 1 oder 2, dadurch gekennzeichnet, daß die Zwischenringe (5) und die Hohlräder (1) als einteilige Bauteile ausgebildet sind.

## Claims

1. A multi-stage planetary gear, consisting of two or more installation assemblies (A, B, C), each having an outer ring gear (1), planet wheels (2) and a sun wheel (4), wherein the installation assemblies (A, B, C) can be assembled to form a stepped transmission unit by means of intermediate rings (5) joining the ring gears (1) to each other, characterised in that each ring gear (1) can be covered according to choice by a separate surrounding outer shell (6) for the formation of an annular channel (7) for the delivery of a temperature-regulating medium, that the outside diameters (D) of the ring gears (1) or those of the installation assemblies (A, B, C) forming the individual transmission stages are stepped in such a way that the one-piece outer shells (6) can be installed or dismantled in the axial direction when the installation assemblies are assembled, that the ring gears (1) are constructed as ring gears of symmetrical cross-section with respect to a perpendicular to the axis of rotation and have surrounding annular grooves (9) occupied by sealing rings (8) on both sides in their edge regions, and that the outer shells (6) are placed on the sealing rings (8) in the edge regions of the ring gears (1).

2. A planetary gear according to claim 1, characterised in that the outer shells (6) and intermediate rings (5) adjoin each other and form a transmission casing for the installation assemblies (A, B, C).

3. A planetary gear according to claim 1 or 2, characterised in that the intermediate rings (5) and the ring gears (1) are constructed as one-piece components.

## Revendications

1. Engrenage planétaire à plusieurs étages, constitué de deux modules (A, B, C) ou plus avec chacun une roue creuse extérieure (1), des roues satellites (2) et une roue planétaire (4), les modules (A, B, C) pouvant être assemblés en un bloc d'engrenage étagé, au moyen d'anneaux intermédiaires (5) reliant entre elles les couronnes (1), caractérisé en ce que chaque couronne (1) peut être garnie au choix de sa propre enveloppe extérieure (6) tournante pour former un canal annulaire (7) pour le guidage d'un fluide d'équilibrage de température, en ce que les diamètres extérieurs (D) des couronnes (1) ou des modules (A, B, C) formant les différents étages de l'engrenage, sont étagés de manière que les enveloppes extérieures (6) d'une seule pièce puissent être montées ou démontées axialement lorsque les modules sont assemblés, en ce que les couronnes (1) sont de section transversale symétrique par rapport à une perpendiculaire à l'axe de rotation et présentent des deux côtés des rainures annulaires (9) périphériques, dans la zone de bordure, équipées de bagues d'étanchéité (8), et en ce que les enveloppes extérieures (6) sont placées dans la zone de bordure des couronnes (1), sur les bagues d'étanchéité (8).

2. Engrenage planétaire selon la revendication 1, caractérisé en ce que les enveloppes extérieures (6) et les anneaux intermédiaires (5) se raccordent les unes aux autres et forment une boîte d'engrenage pour les modules (A, B, C).

3. Engrenage planétaire selon les revendications 1 ou 2, caractérisé en ce que les anneaux intermédiaires (5) et les couronnes (1) sont des composants d'une seule pièce.
